# EUROPÄISCHE PATENTSCHRIFT

(11) **EP 1 450 979 B1**
(45) Veröffentlichungstag und Bekanntmachung des Hinweises auf die Patenterteilung: **12.04.2006**
(21) Anmeldenummer: 02804209.1
(22) Anmeldetag: 02.12.2002
(51) Int. Cl.: B23B 51/10, B23C 5/22

(54) **ROTIERENDES ZERSPANUNGSWERKZEUG**
ROTATING CHIP REMOVING TOOL
OUTIL A ENLEVEMENT DE COPEAUX ROTATIF

(30) Priorität: 04.12.2001 DE 10159512
(43) Veröffentlichungstag der Anmeldung: 01.09.2004
(73) Patentinhaber: KENNAMETAL INC., Latrobe, PA 15650-0231 (US)
(72) Erfinder: JÄGER, Horst, 90451 Nürnberg (DE)
(74) Vertreter: Tergau & Pohl Patentanwälte
(86) Internationale Anmeldenummer: PCT/EP2002/013572
(87) Internationale Veröffentlichungsnummer: WO 2003/047799

(56) Entgegenhaltungen:
- EP-A- 0 798 065
- EP-A- 1 002 608
- GB-A- 1 092 663
- US-A- 4 913 604
- US-A- 5 685 670
- US-A- 5 915 895

## Beschreibung

Die Erfindung betrifft ein rotierendes Zerspanungswerkzeug mit einer Schneidplatte und einem Werkzeugkörper, insbesondere ein Senk- oder Faswerkzeug.

Zur spanabhebenden Materialbearbeitung, insbesondere zur Metallzerspanung, wird häufig ein rotierendes Zerspanungswerkzeug mit einer Schneidplatte, insbesondere einer Wendeschneidplatte, eingesetzt. Die Wendeschneidplatte ist in verschiedenen Positionen am Werkzeugträger fixierbar und ermöglicht somit die Nutzung verschiedener Schneidkanten bzw. verschiedener Bereiche einer Schneidkante, wodurch die Standzeit der Schneidplatte erhöht wird.

Die Wendeschneidplatte beziehungsweise eine sonstige Schneidplatte ist an einem Werkzeugkörper in der Regel in eindeutig definierter Position fixierbar. Aus der DE 92 011 13 U1 ist z.B. eine runde Schneidplatte bekannt, die formschlüssig auf dem Werkzeugkörper gehalten ist. Hierzu weist sowohl die Schneidplatte als auch der Werkzeugkörper formschlüssig ineinander greifende Aus- bzw. Anformungen auf. Die Schneidplatte kann daher in verschiedenen, um einen bestimmten Winkel gedrehten Positionen, nicht jedoch gewendet, das heißt mit vertauschter Unter- und Oberseite, am Werkzeugkörper befestigt werden.

Ein Zerspanungswerkzeug in Form eines drehangetriebenen Senkwerkzeuges mit einer regelmäßig polygonen Wendeschneidplatte ist z.B. aus der DE 41 16 114 A1 bekannt. Die Wendeschneidplatte ist dabei symmetrisch zur Drehachse des Werkzeugs angeordnet. Ein spielfreier Sitz der Wendeschneidplatte soll durch eine quer zur Drehachse verlaufende Nut im Werkzeugkörper erreicht werden. Dieses Senkwerkzeug hat jedoch insbesondere den Nachteil, dass der Schneidplattendurchmesser den Durchmesser einer Bohrung, an der das Senkwerkzeug eine Fase anbringt, überschreiten muss.

Ein Bohr-, Senk- oder Reibwerkzeug mit einer Schneidplatte, die schmaler als eine zu bearbeitende Bohrung ist, ist z.B. aus der DE 197 40 415 A1 bekannt. Die Schneidplatte wird durch eine Spannpratze gehalten, wobei die Position der Spannpratze durch Führungs- und Justierflächen an der Spannpratze sowie am Werkzeugkörper unverrückbar festgelegt ist. Mittel zur unverrückbaren Festlegung der Position der Schneidplatte selbst sind dagegen nicht vorgesehen.

Aus der EP 0 798 065 A2 ist ein Bohrer mit zwei im Wesentlichen in der Form gleichseitiger Dreiecke ausgebildeten Schneideinsätzen bekannt. Dieser Bohrer ist insbesondere für das Bohren weicher Werkstoffe vorgesehen und soll hierbei ein zuverlässiges Abführen des Bohrkerns ermöglichen. Die Schneideinsätze sind mit jeweils einer Schraube am Werkzeugkörper fixiert. Im Hierblick auf die vorliegende Erfindung offenbart die Schrift ein rotierendes Zerspanungswerkzeug mit einer eine Oberseite und eine Unterseite aufweisenden trapezförmigen Schneidplatte, die einen ersten Trapezschenkel mit einer ersten Freifläche und einer aktiven Schneidkante, einen zweiten Trapezschenkel mit einer der aktiven Schneidkante diametral gegenüber liegenden nicht aktiven Kante sowie einer zweiten Fläche und eine Trapezgrundlinie sowie einen Werkzeugkörper, der zur Aufnahme der Schneidplatte einen Plattensitz aufweist.

Ein kombiniertes Bohr-Fas-Werkzeug ist z.B. aus der WO 942 52 10 A1 bekannt. Dieses Werkzeug weist mehrere verstellbare Schneidplatten auf, wodurch eine Einstellung auf verschiedene Bohrdurchmesser möglich ist. Die Verstellbarkeit der Schneidplatten bedingt jedoch zugleich eine aufwändige Konstruktion und schränkt die Stabilität der Schneidplattenhalterung ein. Die Schneidplatten sind zudem nicht als Wendeschneidplatten ausgeführt.

Der Erfindung liegt die Aufgabe zugrunde, ein besonders geeignetes rotierendes Zerspanungswerkzeug, insbesondere ein Senk- oder Faswerkzeug, mit auswechselbarer Schneidplatte, anzugeben.

Diese Aufgabe wird erfindungsgemäß gelöst durch ein rotierendes, d.h. rotierbares Zerspanungswerkzeug mit den Merkmalen des Anspruchs 1. Hierbei weist eine trapezförmige Schneidplatte des rotierenden Zerspanungswerkzeugs zwei Trapezschenkel mit jeweils einer Fläche und einer Kante auf, wobei an einem ersten Trapezschenkel eine aktive Schneidkante und eine erste Freifläche vorgesehen sind und ein zweiter Trapezschenkel eine nicht aktive Kante sowie eine zweite Fläche aufweist. Die nicht aktive Kante und die Schneidkante liegen sich diametral gegenüber. An der Trapezgrundlinie, d.h. der längeren der beiden parallelen Seiten des Trapezes, ist eine Führungsausnehmung vorgesehen, die an die Unterseite der Wendeschneidplatte grenzt und mit einem entsprechenden Führungssteg an einem Plattensitz des Werkzeugkörpers korrespondiert. Der Führungssteg erstreckt sich längs einer zur Trapezgrundlinie der auf dem Werkzeugträger angeordneten Wendeschneidplatte parallelen Plattensitzgrundlinienkante des Plattensitzes.

Nach einer bevorzugten Ausgestaltung ist die Schneidplatte als Wendeschneidplatte ausgeführt, wobei die nicht aktive Kante eine nicht aktive Schneidkante und die zweite Fläche eine zweite Freifläche ist und eine an eine Oberseite grenzende zweite Führungsausnehmung vorgesehen ist.

Während die an die erste Freifläche anschließende aktive Schneidkante zur spanabhebenden Materialbearbeitung vorgesehen ist, stützt sich nach einer bevorzugten Ausgestaltung die jeweils andere, zweite Freifläche an einer dafür vorgesehenen Abstützfläche des Werkzeugkörpers ab. Neben dem Führungssteg an dem Plattensitz ist damit ein weiteres die Schneidplatte in der bestimmungsgemäßen Position haltendes Element vorgesehen, das die Halterung der Schneidplatte weiter verbessert. Hierbei ist die Abstützfläche bevorzugt derart gestaltet, dass die Schneidplatte mit deren zweiter Fläche den Werkzeugkörper dort zumindest teilweise hintergreift, das heißt, dass die Schneidplatte nicht mit einer Bewegungsrichtung ausschließlich senkrecht zum Plattensitz von diesem entfembar ist. Auf diese Weise ist eine besonders exakte und sichere Führung der Schneidplatte auf dem Werkzeugkörper erreicht.

Eine besonders einfache und zugleich wirkungsvolle Fixierung der Schneidplatte am Werkzeugkörper wird vorzugsweise durch eine Lochklemmung erreicht. Hierzu weisen sowohl der Werkzeugkörper als auch die Schneidplatte eine Bohrung auf, wobei zumindest die Bohrung im Werkzeugkörper mit einem Gewinde versehen ist. Die Verwendung einer Doppelgewindeschraube ist möglich, wenn auch die Schneidplatte eine Gewindebohrung aufweist.

Die vorgesehene Vorschubrichtung des rotierenden Werkzeuges ist bevorzugt zur Trapezgrundlinie der Schneidplatte parallel. Hierbei ist es unerheblich, ob das rotierende Werkzeug und/oder das zu bearbeitende Werkstück antreibbar ist. Das Zerspanungswerkzeug oder rotierende Werkzeug weist vorzugsweise eine schmale lang gestreckte Schneidplatte auf, deren Dicke weniger als ein Viertel und deren Breite weniger als die Hälfte deren durch die Trapezgrundlinie gegebenen Länge beträgt. Die die Schneidkanten beziehungsweise die Schneidkante und die nicht aktive Kante tragenden Trapezschenkel schließen mit der Trapezgrundlinie bevorzugt jeweils einen Winkel von 30° bis 60° ein.

Um eine besonders stabile Führung der Schneidplatte oder des Schneideinsatzes am Werkzeugkörper zu gewährleisten, erstrecken sich der Führungssteg auf dem Plattensitz sowie die zugehörige Führungsausnehmung der Schneidplatte bevorzugt über mindestens die Hälfte der entsprechenden Abmessung des Plattensitzes an dem Werkzeugkörper bzw. der Länge der Schneidplatte. Ohne relevante Einschränkung der Stabilität kann der Führungssteg derart gestaltet sein, dass dieser nicht über die Kontur der Schneidplatte sowie des Plattensitzes hinaus geht. Dabei verjüngt sich der Führungssteg nach einer bevorzugten Ausgestaltung in Richtung zu dem Trapezschenkel hin, der die aktive Schneidkante aufweist.

Die mit der Erfindung erzielten Vorteile liegen insbesondere darin, dass das Zerspanungswerkzeug eine besonders einfache und stabile Fixierung einer Schneidplatte ermöglicht, die vorteilhafterweise länglich ist. Hierzu ist ein vorzugsweise parallel zur Symmetrieachse des Werkzeugs ausgerichteter Führungssteg am Werkzeugkörper sowie eine korrespondierende Führungsausnehmung am Schneideinsatz vorgesehen.

Bevorzugt ist das Zerspanungswerkzeug als Senk- oder Faswerkzeug ausgebildet. Hierbei können mehrere Schneidplatten symmetrisch um eine Symmetrieachse angeordnet sein, wobei längs der Symmetrieachse eine Aufnahme für einen Bohrer vorgesehen sein kann, so dass das Zerspanungswerkzeug als Bohr-Fas-Werkzeug nutzbar ist. Bei der Ausbildung als Bohr-Fas-Werkzeug ist eine lang gestreckte Gestaltung der Schneidplatten besonders geeignet, wobei die Schneidplatten im wesentlichen parallel zur Symmetrieachse ausgerichtet sind. Durch die Abstützung der Schneidplatten am Führungssteg des Werkzeugkörpers können die Schneidplatten, ohne sich an einem längs der Symmetrieachse des Zerspanungswerkzeugs angeordneten Einsatz, insbesondere einem Bohrer, abzustützen, mit sehr geringem oder keinem Abstand zur Oberfläche des Einsatzes, insbesondere Bohrers, stabil gelagert sein. Bei Verwendung eines Bohrers als zentraler Einsatz im Zerspanungswerkzeug ist sogar eine Positionierung der Schneidplatten teilweise innerhalb des Bohrdurchmessers möglich. Um einen ausreichenden Raum insbesondere für die Aufnahme eines Bohrers zur Verfügung zu stellen, ist der aus dem Plattensitz hervorstehende Führungssteg bevorzugt derart gestaltet, dass dieser, in Draufsicht auf die Oberseite der auf dem Plattensitz montierten Schneidplatte, nicht über deren Kontur hinausragt.

Ein Ausführungsbeispiel der Erfindung wird nachfolgend anhand einer Zeichnung näher erläutert. Hierin zeigen:
- Fig. 1a-c: eine Wendeschneidplatte eines Zerspanungswerkzeuges in Draufsicht, Seitenansicht beziehungsweise Frontansicht;

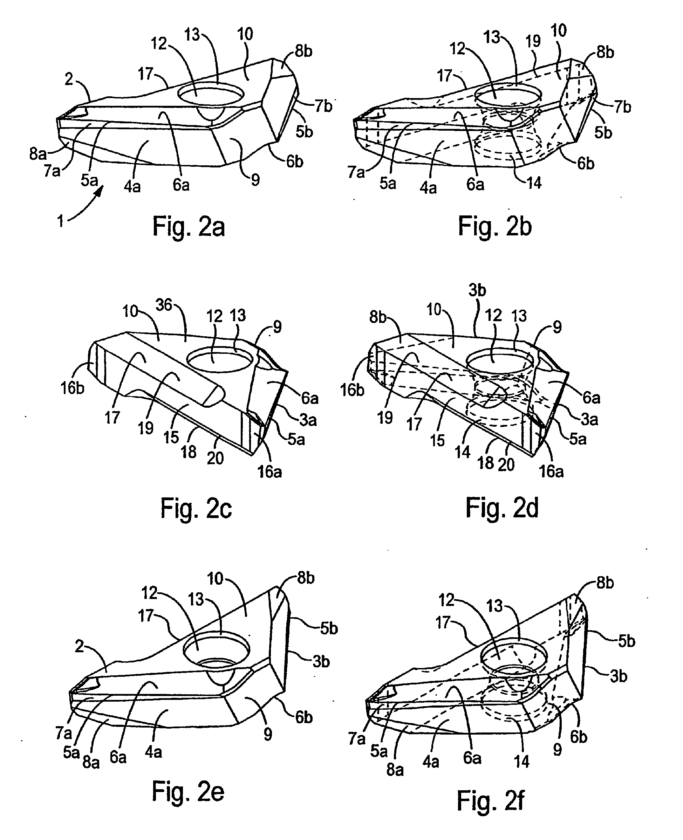

- Fig. 2a-f: die Wendeschneidplatte nach Fig. 1 in verschiedenen perspektivischen Darstellungen;
- Fig. 3a-c: ein als Senkwerkzeug ausgebildetes Zerspanungswerkzeug mit zwei Wendeschneidplatten nach Fig. 1 und Fig. 2 in Frontansicht und verschiedenen Seitenansichten;
- Fig. 4 a-c: einen Plattensitz eines Werkzeugkörpers des Zerspanungswerkzeuges nach Fig. 3 mit bzw. ohne Wendeschneidplatte in perspektivischen Darstellungen;
- Fig. 5a-d: die Befestigung der Wendeschneidplatte an einem Plattensitz des Werkzeugkörpers;
- Fig. 6a-d: Details des Werkzeugkörpers des Zerspanungswerkzeuges mit Wendeschneidplatte in Ansichten analog den Fig. 5a-d);
- Fig. 7a-d: Details des Werkzeugkörpers in Ansichten entsprechend den Fig. 6a-d), jedoch ohne Wendeschneidplatte, mit Darstellung verdeckter Konturen;
- Fig. 8a-d: Details des Werkzeugkörpers in Ansichten entsprechend den Fig. 7a-d) ohne Darstellung verdeckter Konturen.

Einander entsprechende Teile sind in allen Figuren mit den gleichen Bezugszeichen versehen.

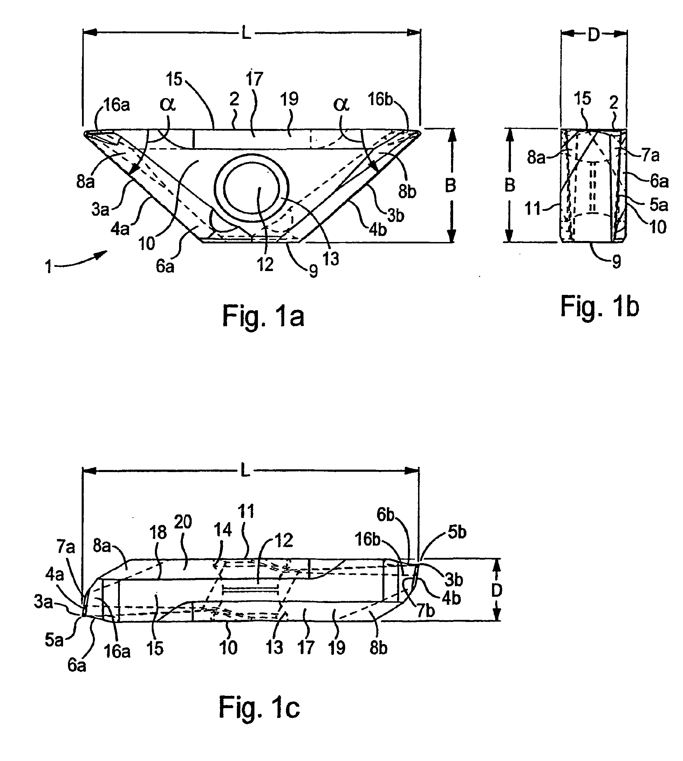

Die Figuren 1a bis 1 c und 2a bis 2f zeigen in verschiedenen Ansichten eine trapezförmige nachfolgend als Wendeschneidplatte 1 bezeichnete Schneidplatte mit einer Trapezgrundlinie 2 der Länge L sowie zwei Trapezschenkeln 3a,3b, die mit der Trapezgrundlinie 2 jeweils einen Winkel α von ca. 45° einschließen. An den Trapezschenkeln 3a,3b weist die trapezförmige Wendeschneidplatte 1 jeweils eine Freifläche 4a,4b sowie eine Schneidkante 5a,5b auf. An die Schneidkanten 5a,5b schließt sich jeweils direkt eine Spanformnut 6a,6b an, die im Wesentlichen parallel zum jeweiligen Trapezschenkel 3a,3b verläuft, sich jedoch längs des Trapezschenkels 3a,3b von der Trapezgrundlinie 2 weg aufweitet. Die Freiflächen 4a,4b weisen jeweils eine Hauptschneidenfase 7a,7b auf. Weiterhin ist an den Trapezschenkeln 3a,3b jeweils eine der Hauptschneidenfase 7a,7b gegenüberliegende, in Relation zu dieser schräg verlaufende und an die Trapezgrundlinie 2 grenzende Schrägfase 8a,8b vorgesehen.

Gegenüber der Trapezgrundlinie 2 wird die Wendeschneidplatte 1 von einer zur Trapezgrundlinie 2 parallelen oberen Fläche 9 begrenzt. Die Wendeschneidplatte 1 weist femer eine Oberseite 10 und eine zu dieser parallele Unterseite 11 auf. Eine mittig angeordnete Bohrung 12 durchdringt die Ober- und Unterseite 10,11 und weist an diesen jeweils eine Bohrungsfase 13,14 auf. An der Trapezgrundlinie 2 weist eine im Wesentlichen plane Frontfläche 15 an deren den Trapezschenkeln 3a,3b zugewandten Seiten jeweils eine Frontfase 16a,16b auf, die jeweils mehrere Winkelbereiche umfassen kann. In dem Übergangsbereich zwischen der Frontfläche 15 und der Oberseite 10 sowie dem Übergangsbereich zwischen der Frontfläche 15 und der Unterseite 11 ist jeweils eine langgestreckte, parallel zur Trapezgrundlinie 2 verlaufende obere Führungsausnehmung 17 bzw. untere Führungsausnehmung 18 vorgesehen.

Die Führungsausnehmungen 17,18 weisen eine gegenüber der Frontfläche 15 sowie gegenüber der Oberseite 10 bzw. der Unterseite 11 jeweils eine um etwa 45° schräg gestellte Führungsfläche 19,20 auf. Die Führungsausnehmungen 17,18 erstrecken sich über den größten Teil der Länge L der Trapezgrundlinie 2 und grenzen an den Trapezschenkel 3b bzw. an den Trapezschenkel 3a.

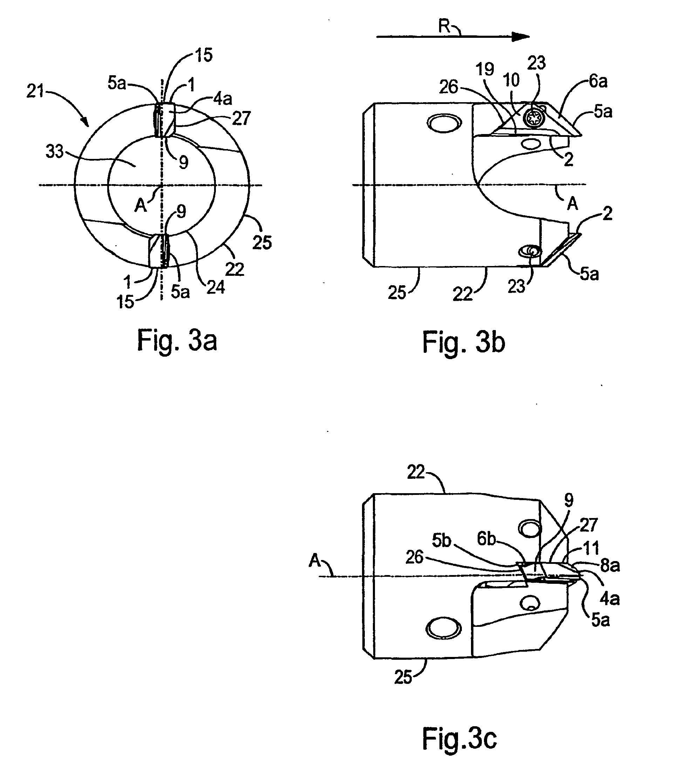

Die Figuren 3a bis 3c zeigen ein als Senkwerkzeug ausgeführtes Zerspanungswerkzeug 21 mit einem Werkzeugkörper 22 und zwei darauf mit jeweils einer Schraube 23 befestigten trapezförmigen Wendeschneidplatten 1. Der Werkzeugkörper 22 ist im Wesentlichen ringförmig zur Aufnahme eines (nicht dargestellten) Bohrers in einer Symmetrieachse A ausgebildet. Die bezüglich der Symmetrieachse A spiegelsymmetrisch am Werkzeugkörper 22 montierten Wendeschneidplatten 1 sind mit deren jeweiliger Frontseite 15 einem Innenrand 24 und mit deren jeweiliger oberer Fläche 9 einem Außenrand 25 des Werkzeugkörpers 22 zugewandt. Die am ersten Trapezschenkel 3a angeordnete aktive Schneidkante 5a, an der die erste Freifläche 4a grenzt, ist zur Anbringung einer Fase an einer Bohrung in einem nicht dargestellten Werkstück vorgesehen, während die gegenüberliegende, zweite Freifläche 4b an einer Abstützfläche 26 des Werkzeugkörpers 22 anliegt und die in diesem Beispiel nicht aktive Schneidkante 5b aufweist. Werden die zwei Wendeschneidplatten 1 am Werkzeugkörper 22 gegen einander getauscht, so tauschen damit auch die Freiflächen 4a,4b sowie Schneidkanten 5a,5b deren jeweilige Funktion.

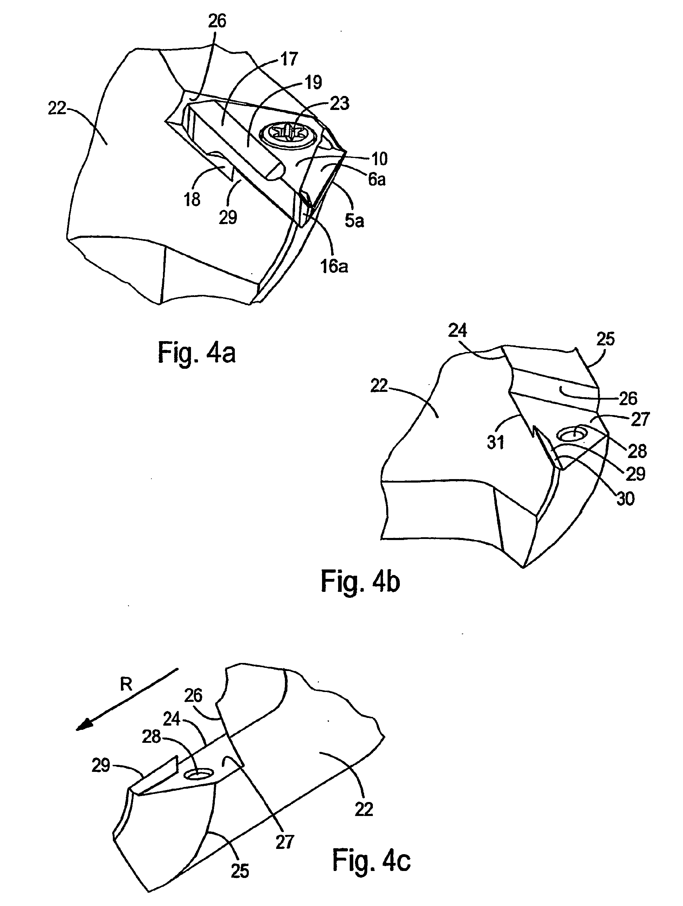

Die Halterung der Wendeschneidplatte 1 am Werkzeugkörper 22 ist im Detail aus den Figuren 4a bis 4c ersichtlich. Ein Schneidplattensitz 27 des Werkzeugkörpers 22 weist eine Gewindebohrung 28 zur Aufnahme der Schraube 23 sowie im Bereich des inneren Randes 24 einen Führungssteg 29 auf. Die Form des Führungssteges 29 ist der Form der Führungsausnehmungen 17,18 angepasst, so dass die Führungsfläche 19,20 an einer Führungsfläche 30 des Führungssteges 29 anliegt. Jegliche, insbesondere durch den Zerspanungsprozess hervorgerufene, Verlagerung der Wendeschneidplatte 1 in Richtung des inneren Randes 24 des Werkzeugkörpers 22 ist damit sicher verhindert. Hierbei ist insbesondere berücksichtigt, dass beim Betrieb des Senkwerkzeugs 21 durch den Zerspanungsvorgang eine sogenannte Passivkraft auf die aktive Schneidkante 5a in Richtung der Symmetrieachse A wirkt. Der Führungssteg 29 trägt wesentlich dazu bei, die auf dem Werkzeugkörper 22 montierte Wendeschneidplatte 1 entgegen dieser Passivkraft in der vorgegebenen Position zu halten.

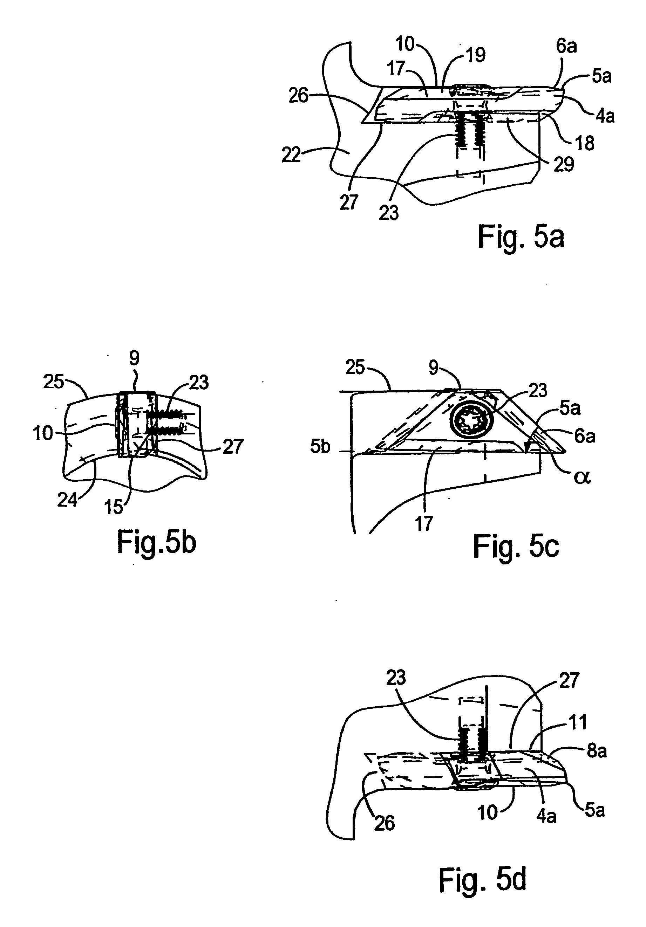

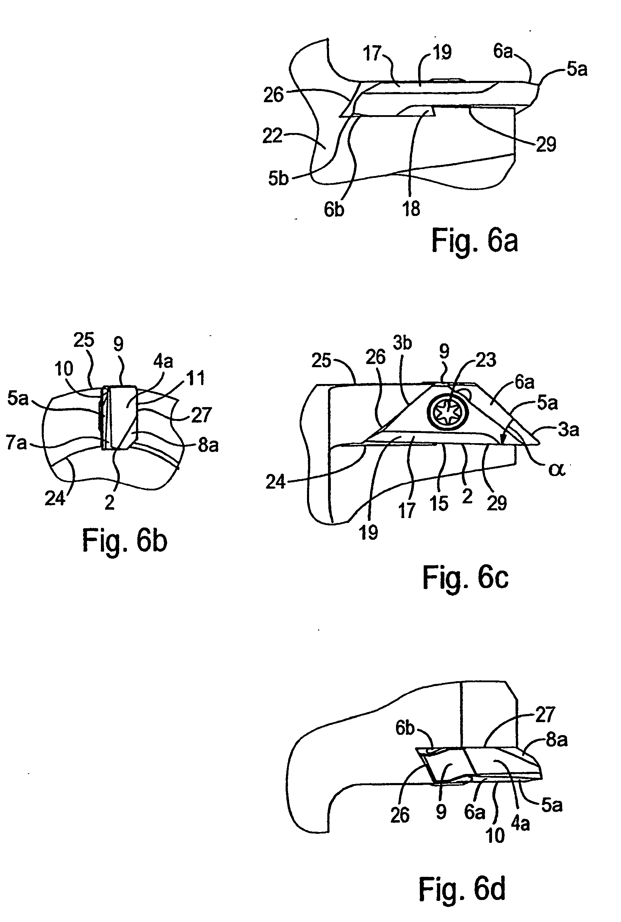

Der Führungssteg 29 erstreckt sich im Wesentlichen parallel zu einer Plattensitzgrundlinienkante 31 des Plattensitzes 27 und verjüngt sich zu einer Plattensitzspitze 32 hin, die in Richtung einer Vorschubrichtung R des Zerspanungswerkzeuges 21 weist. Durch die Ausdehnung des Führungsstegs 29 bis zur Plattensitzspitze 32 ist eine mechanisch stark belastbare Fixierung der Wendeschneidplatte 1 besonders auch im Bereich des ersten Trapezschenkels 3a mit der aktiven Schneidkante 5a erreicht. Ergänzt wird diese Abstützung durch die Abstützung der Wendeschneidplatte 1 an der Abstützfläche 26, die ebenfalls verhindert, dass sich die Wendeschneidplatte 1 um die Schraube 23 dreht und damit die erste Freifläche 4a in Richtung der Symmetrieachse verlagert wird. In keinem Fall wird durch die Wendeschneidplatte 1 eine direkte Kraft auf einen im Werkzeugkörper 22 in einer Bohreraufnahme 33 geführten (nicht dargestellten) Bohrer ausgeübt. Hierbei ist, in der Draufsicht auf die Schneidplatte 1 entsprechend den Fig. 5c und 6c, der Führungssteg 29 derart innerhalb der trapezförmigen Außenkontur des Schneideinsatzes 1 angeordnet, dass dieser am Bohrer anliegt oder teilweise in die Spannuten des Bohrers eingreift und somit innerhalb des Bohrdurchmessers positioniert ist. Zusätzliche Ausnehmungen am Bohrer sind hierbei nicht erforderlich.

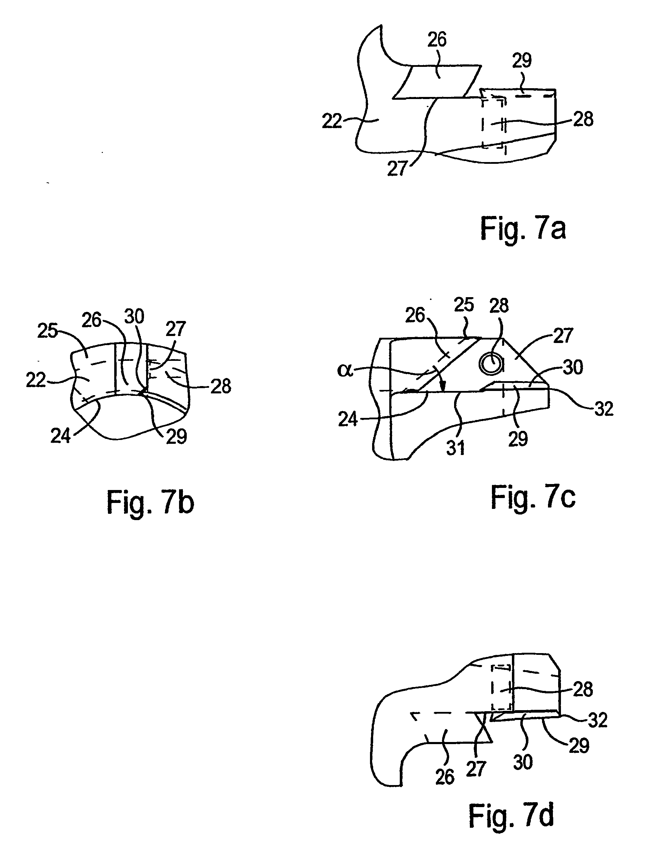

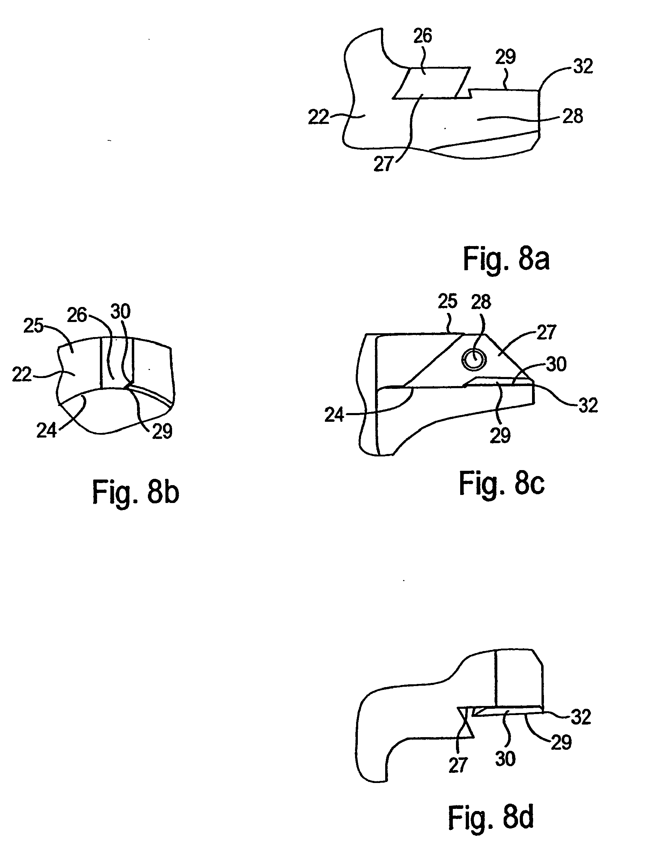

Die Figuren 4 a-c bis 8 a-d verdeutlichen insbesondere die Ausgestaltung des Plattensitzes 27 und die Aufnahme der Wendeschneidplatte 1 auf diesem. Aus der Figur 7 c wird im Vergleich mit der Figur 8 c die Hinterschneidung besonders deutlich, durch die die Wendeschneidplatte 1 im Bereich der Abstützfläche 26 exakt fixierbar ist. Dadurch, dass die Wendeschneidplatte 1 den Werkzeugkörper 22 an dieser Stelle teilweise hintergreift, ist sicher verhindert, dass an der aktiven Schneidkante 5a angreifende Schneidkräfte die Wendeschneidplatte 1 auf dem Werkzeugkörper 22 verschieben. Die dargestellten Beispiele beziehen sich auf das in den Figuren 3 a-c gezeigte Senkwerkzeug 21, sind jedoch in entsprechend angepasster Form auch auf ein anderes rotierendes Zerspanungswerkzeug wie einen Bohrer oder ein kombiniertes Bohr- und Faswerkzeug übertragbar.

## Patentansprüche

1. Rotierendes Zerspanungswerkzeug mit
- einer eine Oberseite (10) und eine Unterseite (11) aufweisenden trapezförmigen Schneidplatte (1), die
- einen ersten Trapezschenkel (3a) mit einer ersten Freifläche (4a) und einer aktiven Schneidkante (5a),
- einen zweiten Trapezschenkel (3b) mit einer der aktiven Schneidkante (5a) diametral gegenüber liegenden nicht aktiven Kante (5b) sowie einer zweiten Fläche (4b), und
- eine Trapezgrundlinie (2) mit einer an die Unterseite (11) grenzenden Führungsausnehmung (18) aufweist, sowie
- einem Werkzeugkörper (22), der
- zur Aufnahme der Schneidplatte (1) einen Plattensitz (27) mit einem mit der Führungsausnehmung (18) korrespondierenden Führungssteg (29) längs einer der Trapezgrundlinie (2) parallelen Plattensitzgrundlinienkante (31) des Plattensitzes (27) aufweist.

2. Rotierendes Zerspanungswerkzeug nach Anspruch 1,
**dadurch gekennzeichnet,**
**dass** die Schneidplatte (1) als Wendeschneidplatte ausgeführt ist, wobei die nicht aktive Kante (5b) eine Schneidkante und die zweite Fläche (4b) eine zweite Freifläche ist, und wobei eine an die Oberseite (10) grenzende Führungsausnehmung (17) vorgesehen ist.

3. Rotierendes Zerspanungswerkzeug nach Anspruch 1 oder 2,
**gekennzeichnet durch**
eine mit der zweiten Fläche (4b) des zweiten Trapezschenkels (3b) der Schneidplatte (1) korrespondierende Abstützfläche (26) des Werkzeugkörpers (22).

4. Rotierendes Zerspanungswerkzeug nach Anspruch 3,
**dadurch gekennzeichnet,**
**dass** die Schneidplatte (1) mit deren zweiter Fläche (4b) den Werkzeugkörper (22) an dessen Abstützfläche (26) zumindest teilweise hintergreift.

5. Rotierendes Zerspanungswerkzeug nach einem der Ansprüche 1 bis 4,
**gekennzeichnet durch**
eine Lochklemmung mit einer Bohrung (12) in der Schneidplatte (1) und eine korrespondierende Gewindebohrung (28) in dem Werkzeugkörper (22).

6. Rotierendes Zerspanungswerkzeug nach einem der Ansprüche 1 bis 5,
**dadurch gekennzeichnet,**
**dass** eine Vorschubrichtung (R) parallel zur Trapezgrundlinie (2) ist.

7. Rotierendes Zerspanungswerkzeug nach einem der Ansprüche 1 bis 6,
**dadurch gekennzeichnet,**
**dass** die Dicke (D) der Schneidplatte (1) weniger als ein Viertel deren Länge (L) beträgt.

8. Rotierendes Zerspanungswerkzeug nach einem der Ansprüche 1 bis 7,
**dadurch gekennzeichnet,**
**dass** die Breite (B) der Schneidplatte (1) weniger als die Hälfte deren Länge (L) beträgt.

9. Rotierendes Zerspanungswerkzeug nach einem der Ansprüche 1 bis 8,
**dadurch gekennzeichnet,**
**dass** sich die Führungsausnehmung (17,18) sowie der Führungssteg (29) über mindestens die Hälfte der Trapezgrundlinie (2) bzw. der Plattensitzgrundlinienkante (31) erstrecken.

10. Rotierendes Zerspanungswerkzeug nach einem der Ansprüche 1 bis 9,
**dadurch gekennzeichnet,**
**dass** sich der Führungssteg (29) zu einer Plattensitzspitze (32) hin verjüngt.

11. Rotierendes Zerspanungswerkzeug nach einem der Ansprüche 1 bis 10,
**dadurch gekennzeichnet,**
**dass** der Werkzeugkörper (22) Teil eines Senkwerkzeuges (21) ist.

12. Rotierendes Zerspanungswerkzeug nach Anspruch 11,
**dadurch gekennzeichnet,**
**dass** mehrere Plattensitze (27) symmetrisch um eine Symmetrieachse (A) angeordnet sind.

13. Rotierendes Zerspanungswerkzeug nach Anspruch 12,
**gekennzeichnet durch**
eine längs der Symmetrieachse (A) angeordnete Bohreraufnahme (33).

14. Rotierendes Zerspanungswerkzeug nach einem der Ansprüche 1 bis 13,
**dadurch gekennzeichnet,**
**dass** der Führungssteg (29), in Draufsicht auf die Oberseite (10) der auf dem Plattensitz (27) gehaltenen Schneidplatte (1), nicht über deren Kontur hinausragt.

## Claims

1. Rotating chip removing tool, having
- a trapezoidal cutting insert (1) which has a top side (10) and an underside (11) and which
- has a first trapezium leg (3a) with a first flank face (4a) and an active cutting edge (5a),
- a second trapezium leg (3b) with an inactive cutting edge (5b), diametrically opposite the active cutting edge (5a), and a second face (4b), and
- a trapezium base line (2) with a guide recess (18) adjoining the underside (11), and
- a tool body (22) which
- has an insert seat (27) for accommodating the cutting insert (1), this insert seat (27) having a guide web (29), corresponding with the guide recess (18), along an insert-seat base line edge (31), parallel to the trapezium base line (2), of the insert seat (27).

2. Rotating chip removing tool according to Claim 1, **characterized in that** the cutting insert (1) is designed as an indexable insert, the inactive edge (5b) being a cutting edge and the second face (4b) being a second flank face, and a guide recess (17) which adjoins the top side (10) being provided.

3. Rotating chip removing tool according to Claim 1 or 2, **characterized by** a supporting surface (26) of the tool body (22), this supporting surface (26) corresponding with the second face (4b) of the second trapezium leg (3b) of the cutting insert (1).

4. Rotating chip removing tool according to Claim 3, **characterized in that** the cutting insert (1), with its second face (4b), engages at least partly behind the tool body (22) at its supporting surface (26).

5. Rotating chip removing tool according to one of Claims 1 to 4, **characterized by** hole clamping with a hole (12) in the cutting insert (1) and a corresponding tapped hole (28) in the tool body (22).

6. Rotating chip removing tool according to one of Claims 1 to 5, **characterized in that** a feed direction (R) is parallel to the trapezium base line (2).

7. Rotating chip removing tool according to one of Claims 1 to 6, **characterized in that** the thickness (D) of the cutting insert (1) is less than one quarter of its length (L).

8. Rotating chip removing tool according to one of Claims 1 to 7, **characterized in that** the width (B) of the cutting insert (1) is less than half its length (L).

9. Rotating chip removing tool according to one of Claims 1 to 8, **characterized in that** the guide recess (17, 18) and the guide web (29) extend over at least half the trapezium base line (2) or the insert-seat base line edge (31).

10. Rotating chip removing tool according to one of Claims 1 to 9, **characterized in that** the guide web (29) tapers towards an insert-seat tip (32).

11. Rotating chip removing tool according to one of Claims 1 to 10, **characterized in that** the tool body (22) is part of a countersinking tool (21).

12. Rotating chip removing tool according to Claim 11, **characterized in that** a plurality of insert seats (27) are arranged symmetrically about an axis (A) of symmetry.

13. Rotating chip removing tool according to Claim 12, **characterized by** a drill receptacle (33) arranged along the axis (A) of symmetry.

14. Rotating chip removing tool according to one of Claims 1 to 13, **characterized in that** the guide web (29), in a plan view of the top side (10) of the cutting insert (1) held on the insert seat (27), does not project beyond the contour of said cutting insert (1).

## Revendications

1. Outil rotatif d'enlèvement de matière, comprenant :
- une plaque de coupe trapézoïdale (1) comprenant une face supérieure (10) et une face inférieure (11), qui comprend
- un premier côté de trapèze (3a) pourvu d'une première dépouille (4a) et d'une arête de coupe active (5a),
- un second côté de trapèze (3b) pourvu d'une arête inactive (5b) diamétralement opposée à l'arête de coupe active (5a) et d'une seconde surface (4b), et
- une base de trapèze (2) pourvue d'un évidement de guidage (18) adjacent à la face inférieure (11), et
- un corps d'outil (22) qui
- dans le but de recevoir la plaque de coupe (1), comprend un siège de plaque (27) pourvu d'une barrette de guidage (29) correspondant à l'évidement de guidage (18) et située le long d'une arête de base (31) du siège de plaque (27) parallèle à la base de trapèze (2).

2. Outil rotatif d'enlèvement de matière selon la revendication 1,
**caractérisé en ce que**
la plaque de coupe (1) est réalisée sous forme de plaque de coupe réversible, l'arête inactive (5b) étant une arête de coupe et la seconde surface (4b) étant une seconde dépouille, outil dans lequel est prévu un évidement de guidage (17) adjacent à la face supérieure (10).

3. Outil rotatif d'enlèvement de matière selon l'une ou l'autre des revendications 1 et 2,
**caractérisé par**
une surface d'appui (26) du corps d'outil (22), qui correspond avec la seconde surface (4b) du second côté de trapèze (3b) de la plaque de coupe (1).

4. Outil rotatif d'enlèvement de matière selon la revendication 3,
**caractérisé en ce que**
par sa seconde surface (4b), la plaque de coupe (1) engage par l'arrière au moins partiellement le corps d'outil (22) au niveau de sa surface d'appui (26).

5. Outil rotatif d'enlèvement de matière selon l'une des revendications 1 à 4,
**caractérisé par**
un système de coincement à trou présentant un perçage (12) dans la plaque de coupe (1) et un perçage taraudé correspondant (28) dans le corps d'outil (22).

6. Outil rotatif d'enlèvement de matière selon l'une des revendications 1 à 5,
**caractérisé en ce que**
une direction d'avance (R) est parallèle à la base de trapèze (2).

7. Outil rotatif d'enlèvement de matière selon l'une des revendications 1 à 6,
**caractérisé en ce que**
l'épaisseur (D) de la plaque de coupe (1) est inférieure à un quart de sa longueur (L).

8. Outil rotatif d'enlèvement de matière selon l'une des revendications 1 à 7,
**caractérisé en ce que**
la largeur (B) de la plaque de coupe (1) est inférieure à la moitié de sa longueur (L).

9. Outil rotatif d'enlèvement de matière selon l'une des revendications 1 à 8,
**caractérisé en ce que**
l'évidement de guidage (17, 18) ainsi que la barrette de guidage (29) s'étendent au moins sur la moitié de la base de trapèze (2) ou de l'arête de base de siège (31).

10. Outil rotatif d'enlèvement de matière selon l'une des revendications 1 à 9,
**caractérisé en ce que**
la barrette de guidage (29) va en se rétrécissant vers une pointe de siège (32).

11. Outil rotatif d'enlèvement de matière selon l'une des revendications 1 à 10,
**caractérisé en ce que**
le corps d'outil (22) fait partie d'un outil de descente (21).

12. Outil rotatif d'enlèvement de matière selon la revendication 11,
**caractérisé en ce que**
plusieurs sièges de plaque (27) sont agencés à symétrie autour d'un axe de symétrie (A).

13. Outil rotatif d'enlèvement de matière selon la revendication 12,
**caractérisé par**
un logement de mèche (33) agencé le long de l'axe de symétrie (A).

14. Outil rotatif d'enlèvement de matière selon l'une des revendications 1 à 13,
**caractérisé en ce que**
en vue de dessus sur la face supérieure (10) de la plaque de coupe (1) retenue sur le siège de plaque (27), la barrette de guidage (29) ne dépasse pas au-delà de son contour.
